# EUROPEAN PATENT SPECIFICATION

(11) **EP 0 726 197 B1**
(45) Date of publication and mention of the grant of the patent: **27.10.1999**
(21) Application number: 96101705.0
(22) Date of filing: 06.02.1996
(51) Int. Cl.: B62K 11/10, B62K 25/28

(54) **Swing arm structure for vehicle suspension**
Schwingarmstrukturfür Fahrzeugaufhängung
Structure de bras oscillant pour suspension de véhicule

(30) Priority: 07.02.1995 JP 1940495
(43) Date of publication of application: 14.08.1996
(73) Proprietor: HONDA GIKEN KOGYO KABUSHIKI KAISHA, Minato-ku Tokyo (JP)
(72) Inventor: Maeda, Tadayuki, Wako-shi, Saitama (JP); Okazaki, Yasunori, Wako-shi, Saitama (JP); Takewaka, Tomoyuki, Wako-shi, Saitama (JP)
(74) Representative: Liska, Horst, Dr.-Ing.

(56) References cited:
- EP-A- 0 303 408
- GB-A- 2 948
- GB-A- 167 245
- JP-U- 62 036 984
- US-A- 2 604 179

## Description

The present invention relates to a vehicle, comprising a vehicular body and an engine in driving connection with a rear wheel of said vehicle through a transmission accommodated within a transmission case, said engine being connected to a muffler through an exhaust pipe, a swing unit pivotably supported on said vehicular body including said transmission case and a swing arm extending in longitudinal direction of said vehicle, said swing unit supporting an axle of said rear wheel between a rear end of said transmission case and a rear end of said swing arm, said transmission case being connected to one lateral side of a rear portion of said engine and the swing arm being connected to the other lateral side of said rear portion of said engine.

Such a vehicle has been known, for example in Japanese Utility Model Laid-open No. Sho 62-36984.

In the above-described prior art vehicle, a swing arm is composed of a plate-like member having no opening. Consequently, in the case where the width of the swing arm is broadened in the vertical direction for increasing rigidity of the swing arm, there occurs an inconvenience that engine noise and/or running noise resonate in a space surrounded by a transmission case disposed on one side of the vehicular body and the swing arm disposed on the other side of the vehicular body. This allows the engine noise and/or running noise to be increased.

An object of the present invention is to provide a swing unit type vehicle having a swing arm capable of suppressing noise increased due to resonance.

To achieve the above object, according to claim 1, there is provided a vehicle, comprising a vehicular body and an engine in driving connection with a rear wheel of said vehicle through a transmission accommodated within a transmission case, said engine being connected to a muffler through an exhaust pipe, a swing unit pivotably supported on said vehicular body including said transmission case and a swing arm extending in longitudinal direction of said vehicle, said swing unit supporting an axle of said rear wheel between a rear end of said transmission case and a rear end of said swing arm, said transmission case being connected to one lateral side of a rear portion of said engine and the swing arm being connected to the other lateral side of said rear portion of said engine, characterized in that at least one opening is formed in said swing arm in such a manner as to penetrate said swing arm in lateral direction of the vehicular body and a mounting stay supporting said muffler or the exhaust pipe is co-fastened to said engine by means of bolts for fastening said swing arm to said engine.

As a result, engine noise and/or running noise are prevented from resonating in a space surrounded by the transmission case and the swing arm, thus suppressing the noise increased due to the resonance. Because the mounting stay is co-fastened to the engine by means of bolts for fastening the swing arm to the engine, the number of parts for mounting the muffler or the exhaust pipe are reduced.

Preferably, a plurality of the openings are arranged in the swing arm along the longitudinal direction of the vehicular body so that the swing arm is formed in a ladder-like shape.

This makes it possible to ensure a high rigidity of the swing arm while reducing the weight thereof.

Preferably, the swing arm is fixed, at an upper front portion and a lower front portion thereof, to the engine.

As a result, it is possible to increase the rigidity of the swing arm against a load vertically applied from the axle supported on the rear side of the swing arm.

Preferably, a further opening is formed in the mounting stay in such a manner as to penetrate the mounting stay in the lateral direction of the vehicular body.

Therefore, the noise increased due to resonance can be further suppressed by the presence of the openings formed in the swing arm in cooperation with the further opening formed in the muffler mounting stay.

Preferably, if the mounting stay supports the exhaust pipe, the muffler is fastened to the rear portion of the swing arm by means of a bolt.

As a result, the exhaust sytem can be certainly supported by fixing both the exhaust pipe and the muffler.

Hereinafter, embodiments of the present invention will be described with reference to the accompanying drawings.
Fig. 1 is a left side view of a motor-bicycle.
Fig. 2 is an enlarged view of details of a vehicular body shown in Fig. 1.
Fig. 3 is an enlarged right side view of details of the vehicular body shown in Fig. 1.
Fig. 4 is an enlarged sectional view taken on line 4-4 of Fig. 2.
Fig. 5 is an enlarged view of details of a portion shown in Fig. 2.
Fig. 6 is a sectional view taken on line 6-6 of Fig. 5.
Fig. 7 is a sectional view taken on line 7-7 of Fig. 5.
Fig. 8 is a sectional view through a main stand support.
Fig. 9 is an enlarged view, similar to Fig. 3, showing a second embodiment.
Fig. 10 is a sectional view taken on line 10-10 in Fig. 9.

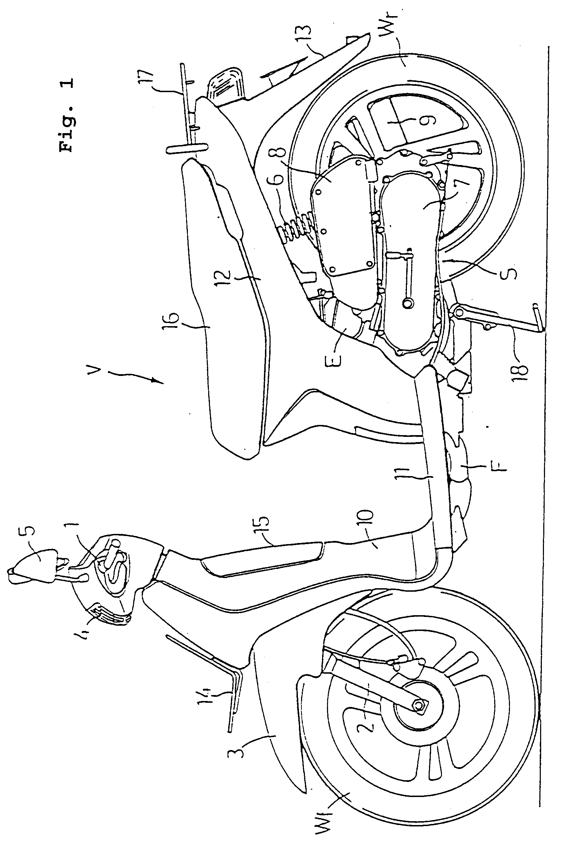

A scooter type motor-bicycle V includes, as shown in Fig. 1, a front wheel Wf and a rear wheel Wr respectively disposed on front and rear portions of a vehicle body. The front wheel Wf is rotatably supported on the lower end of a front fork 2 laterally turnable by a steering handle 1. The upper portion of the front wheel Wf is covered with a front fender 3. A head lamp 4 and a rear view mirror 5 are provided on the steering handle 1. A swing unit S is vertically rockably supported on a vehicular body and is suspended by a pair of right and left cushions 6, 6. The swing unit S includes a front side engine E and a rear side transmission case 7. The rear wheel Wr is rotatably supported on an rear end of the transmission case 7. An air cleaner 8 is provided on the left side surface of the swing unit S, and a muffler 9 is provided on the right surface of the swing unit S.

A vehicular frame F supports: a leg shield 10 for covering the front portions of the legs of a rider; a floor panel 11 for supporting the feet of the rider; a rear cover 12 for covering the rear portion of the vehicular body F; and a rear fender 13 for covering the upper portion of the rear wheel Wr. A front carrier 14 and a front pocket 15 are respectively provided on front and rear surfaces of the leg shield 10. A seat 16 and a rear carrier 17 are respectively provided on front and rear portions of the upper surface of the rear cover 12. A main stand 18 is provided on the lower portion of the vehicular frame F.

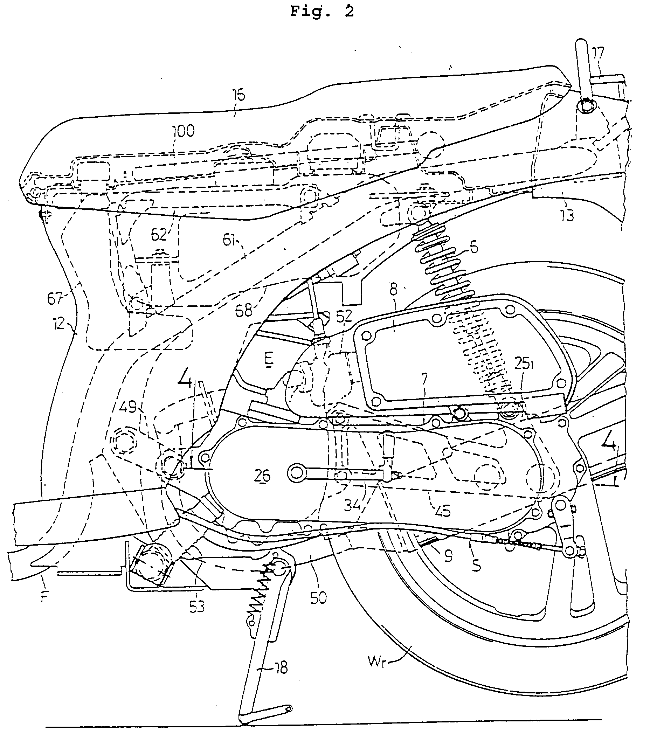

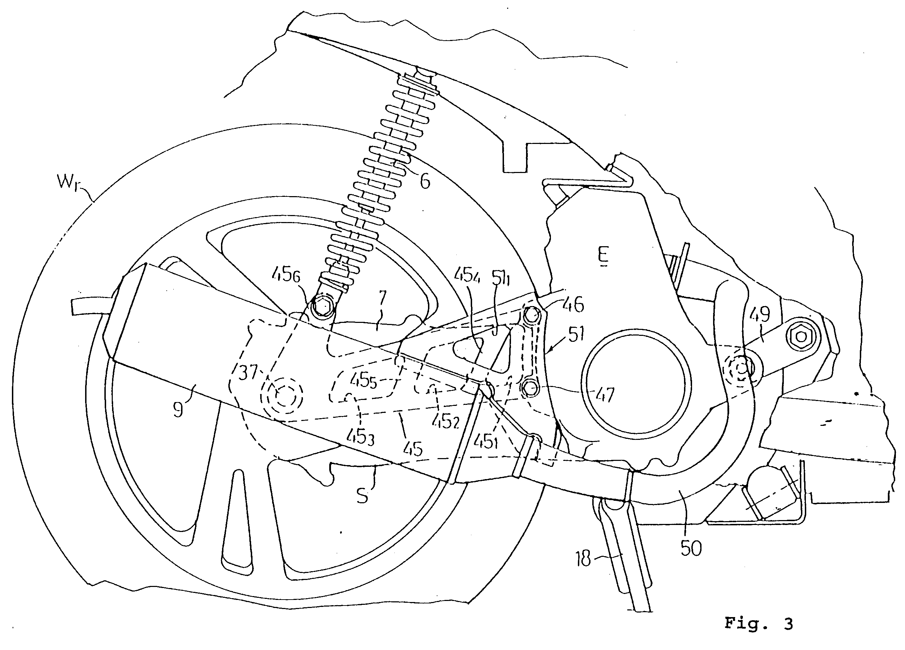

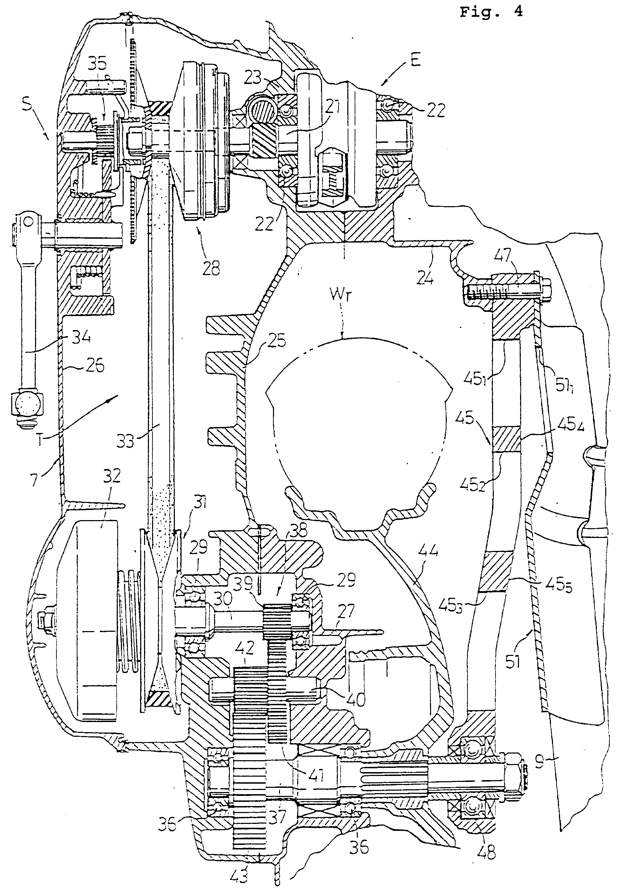

Next, the structure of the swing unit S will be described with reference to Figs. 2 to 4.

An engine E includes a crank case left half 23 and a crank case right half 24 which support both ends of a crank shaft 21 through a pair of ball bearings 22, 22. A transmission case main body 25 is formed integrally with the rear portion of the crank case left half 23. A belt type continuously variable transmission T is contained in the mission case main body 25. A transmission case cover 26 is connected to a left end opening portion of the transmission case main body 25, and a reducer cover 27 is connected to the right surface of the lower portion of the transmission case 25.

The belt type continuous variable transmission T, which is contained in a space defined by the transmission case main body 25 and the transmission case cover 26, includes a drive pulley 28, an output shaft 30, a driven pulley 31, an automatic centrifugal clutch 32, and an endless belt 33. The drive pulley 28, being of a type variable in groove interval by a centrifugal force, is provided at the left end of the crank shaft 21 as an input shaft. The output shaft 30 is supported by the mission case main body 25 and the reducer cover 27 through a pair of the ball bearings 29, 29. The driven pulley 31 is provided on the output shaft 30 in such a manner as to be rotatable relative to the output shaft 30. The automatic centrifugal clutch 32 is provided on the output shaft 30 for allowing the driven clutch 31 to be connected to the output shaft 30. The endless belt 33 is wound around the drive pulley 28 and the driven pulley 31. A kick type starter 35 including a kick pedal 34 is provided on the mission case cover 26.

An axle 37 of the rear wheel Wr is supported on the mission case main body 25 and the reducer cover 27 through a pair of ball bearings 36, 36. The axle 37 is connected to the output shaft 30 through a reducer 38. The reducer 38 is contained in a space defined between the transmission case main body 25 and the reducer cover 27. The reducer 38 includes a first gear 39 provided on the output shaft 30; a second gear 41 and a third gear 42 provided on an intermediate shaft 40; and a fourth gear 43 provided on the axle 37. A wheel 44 of the rear wheel Wr is spline-connected to the axle 37 projecting to the right side of the reducer cover 27.

The transmission case 7 is disposed on the left side of the center surface of the vehicle body, that is, on the left side of the rotating surface of the rear wheel Wr, while the swing arm 45 is disposed on the right side of the center surface of the vehicular body. The swing arm 45 is an aluminum plate member integrally formed in substantially triangular shape by a die casting method. The front portion, being large in width in the vertical direction, of the swing arm 45 is connected to the crank case right half 24 of the engine E by means of a pair of upper and lower bolts 46, 47. The right end of the axle 37 is supported on the rear portion of the swing arm 45 through a ball bearing 48. Three pieces of openings 45₁ to 45₃ are formed in the swing arm 45 along the longitudinal direction of the vehicular body. Three pieces of the openings 45₁ to 45₃ are partitioned from each other by means of two columns 45₄, 45₅. The upper side of each of the columns 45₄, 45₅ is inclined forward. The front side opening 45₁ is formed substantially in a triangular shape; and each of the central and rear side openings 45₂, 45₃ is formed substantially in a parallelogram shape.

The swing unit S, which is composed of the front side engine E, the rear side axle 37, the left side transmission case 7 and the right side swing arm 45, is of such a box structure as to be high in rigidity. The front end of the swing unit S is pivotably supported on the vehicular frame F through a link 49. The rear end of the swing unit S is suspended by the vehicular frame F by means of the right and left cushions 6. The left cushion 6 is connected to a cushion boss 25₁ provided on the rear portion of the transmission case main body 25, and the right cushion 6 is connected to a cushion boss 45₆ provided on the rear portion of the swing arm 45.

The muffler 9 is connected to the rear end of an exhaust pipe 50 extending from the engine E to the right side surface of the vehicular body. A triangular mounting stay 51 is welded to the front portion of the muffler 9. The mounting stay 51 is co-fastened to the engine 7 by means of the two bolts 46, 47 for connecting the swing arm 45 to the engine E. As a result, the number of the parts for supporting the muffler 9 can be reduced. A triangular opening 51₁ is formed in the mounting stay 51.

As described above, the openings 45₁ to 45₃ and the opening 51₁ are respectively formed on the swing arm 45 and the mounting stay 51 which are positioned along the right surface of the transmission case 7, and consequently engine noise and/or running noise are difficult to resonate in a space surrounded by the transmission case 7 and the swing arm 45. In other words, the noise increased due to the resonance can be reduced. On the other hand, the swing arm 45, which is connected at its front end to the engine E by means of the two upper and lower bolts 46, 47, can sufficiently ensure a high rigidity against a load applied in the vertical direction from the rear wheel Wr. The swing arm 45 is also formed in a ladder-like shape by three pieces of the openings 45₁ to 45₃ and the two columns 45₄, 45₅, and thereby it can obtain a high rigidity while reducing its weight due to a weight reducing effect of the openings 45₁ to 45₃.

Referring to Fig. 2, reference numeral 52 indicates a carburetor provided between the air cleaner 8 and the engine E; and reference numeral 53 indicates a duct for introducing a cooling wind from the interior of the vehicular frame F to the interior of the transmission case 7.

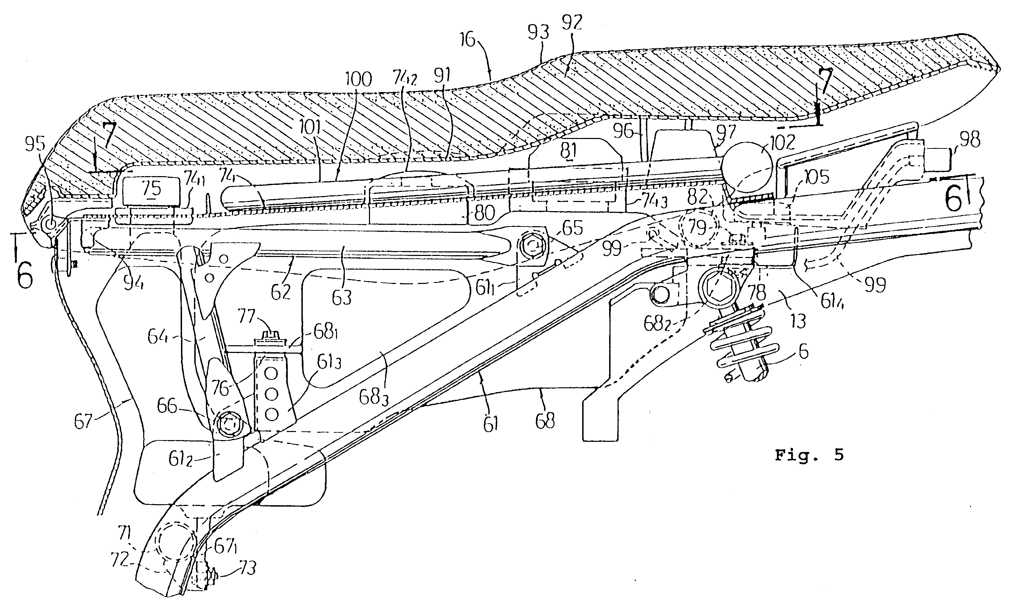

The structure of the rear portion of the vehicular body will be described below with reference to Figs. 5 to 8.

The vehicular frame F includes a pair of right and left rear frames 61, 61 rising upward from the front portion of the swing unit S and extending rearward. Seat rails 62 include a seat supporting portion 63 formed in a U-shape as seen from the upper side, and a pair of right and left leg portions 64, 64 extending downward from the seat supporting portion 63. The right and left rear end portions of the seat supporting portion 63 are removably connected to brackets 61₁, 61₁ provided on the rear frames 61, 61 by means of bolts 65, 65. Besides, the lower ends of the leg portions 64, 64 are removably connected to brackets 61₂, 61₂ provided on the rear frames 61, 61 by means of bolts 66, 66.

An oil tank 67 and a fuel tank 68, each of which is made of synthetic resin, are disposed at front and rear portions in a space surrounded by the rear frames 61, 61 and the seat rails 62. A bracket 67₁ projecting integrally from the lower surface of the oil tank 67 is fixed on a bracket 72 of a cross-member 71 by means of a bolt 73. The cross member 71 is provided for connecting the right and left rear frames 61, 61 to each other. A plate-like tray 74 is disposed substantially in the horizontal direction in such a manner as to cover the upper opening portion of the rear cover 12. A cap 75 for opening/closing an oil filler port of the oil tank 67, extends upward from an opening 74₁ formed in the tray 74.

On the other hand, a pair of right and left brackets 68₁, 68₁ projecting integrally from the front portion of the side surface of the fuel tank 68 are fixed on the brackets 61₃, 61₃ provided on the rear frames 61, 61 through rubber bushes 76, 76 by means of bolts 77, 77. A pair of right and left brackets 68₂, 68₂ projecting integrally from the rear surface of the fuel tank 68 are fixed on the bracket 61₄ hung between the rear frames 61, 61 through rubber bushes 78, 78 by means of bolts 79, 79. A fuel level sensor 80, and a cap 81 for opening/closing the oil filler port project upward from the upper surface of the fuel tank 68. The level sensor 80 is fitted in a projecting portion 74₂ projecting upward from the tray 74 and the cap 81 extends upward from an opening portion 74₃ formed in the tray 74.

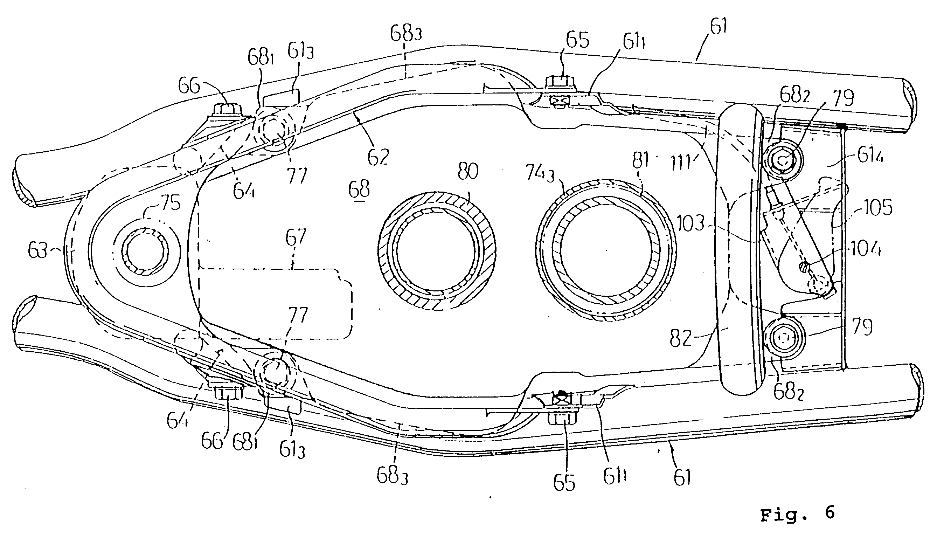

Projecting portions 68₃, 68₃ are formed on right and left side walls of the fuel tank 68 in such a manner as to project in the lateral direction of the vehicular body. As is apparent from Fig. 6, the projecting portions 68₃, 68₃ of the fuel tank 68 are superimposed on the rear frames 61, 61 and the seat rails 62 as seen from the upper side. Specifically, the projecting portions 68₃, 68₃ project to both the sides of the vehicular body in such a manner as to be fitted between the rear frames 61, 61 and the seat supporting portion 63 of the seat rails 62. This is effective to increase the capacity of the fuel tank 68.

In this way, the fuel tank 68 having the projecting portions 68₃, 68₃ can be removably mounted so as not to interfere with the seat rails 62 by removing the removable seat rail 62. As a result, the freedom of design in shape and dimension of the oil tank 67 and the fuel tank 68 disposed inside the seat rails 62 can be significantly increased, to thereby maximize the capacities of the oil tank 67 and the fuel tank 68. Both the tanks 67, 68 can be also protected by surrounding the side portions of the oil tank 67 and the fuel tank 68 with the seat rails 62 and by surrounding the rear portion of the fuel tank 68 with the cross-member 82 hung between the rear frames 61, 61.

The seat 16 includes a bottom plate 91, a cushion member 92 and a skin member 93. The seat 16 is pivotably supported on a bracket 94 provided at the front ends of the seat rails 62 through a seat hinge 95 in such a manner as to be freely opened/closed in the vertical direction. A lock mechanism 97 is provided on the rear portion of the tray 74 in such a manner as to be engaged/disengaged with a U-shaped striker 96 fixed on the lower surface of the bottom plate 91. The lock mechanism 97 is connected to a cylinder lock 98 provided at the rear end of the tray 74 through a Bowden cable 99 for preventing the opening/closing of the seat 16 due to mischief.

An annular burglar preventive device 100 is contained in a space formed between the upper surface of the tray 74 and the lower surface of the bottom plate 91 of the seat 16. The burglar preventive device 100 includes a U-shaped main body 101, and a bar-like removably mounting portion 102 which is lockable to both the ends of the main body 101 by operation of a key. The burglar of the motor-bicycle V is prevented using such a burglar preventive device 100 by a method wherein the removably mounting portion 102 is locked to the main body 101 after the main body 101 passes through the opening portion of the wheel 44 of the rear wheel Wr; or the removably mounting portion 102 is locked to the main body 101 after the main body 101 passes through the opening portion of the wheel 44 of the rear wheel Wr and is then engaged with a fixed structure such as a pillar of guide rails.

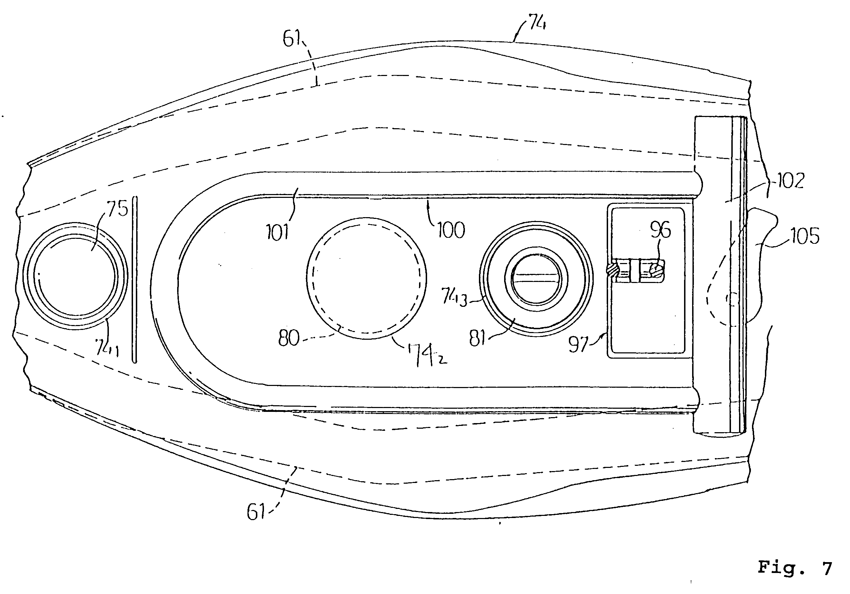

As is apparent from Fig. 7, the cap 75 of the oil tank 67, the cap 81 of the fuel tank 68, and the projecting portion 74₂ to which the level sensor 80 of the fuel tank 68 is fitted, project upward from the upper surface of the tray 74. The burglar preventive device 100 is placed on the upper surface of the tray 74 such that the cap 81, the projecting portion 74₂ and the lock mechanism 97 are fitted in the space surrounded by the main body 101 and the removably mounting portion 102.

As described above, the space is necessarily formed between the upper surface of the tray 74 and the bottom plate 91 of the seat 16 by the presence of the projections such as the cap 75 of the oil tank 67, the cap 81 of the fuel tank 68, the projecting portion 74₂ to which the level sensor 80 of the fuel tank 68 is fitted, and the lock mechanism 97. The space, however, is effectively utilized by containing the burglar preventive device 100 in the space. In addition, the cap 81, the level sensor 80 and the lock mechanism 97 are disposed in the longitudinal direction of the vehicular body, and the closed burglar preventive device 100 is fitted outside the cap 81, the level sensor 80 and the lock mechanism 97, and consequently each of various burglar preventive devices 100 different in length and width can be contained in the space.

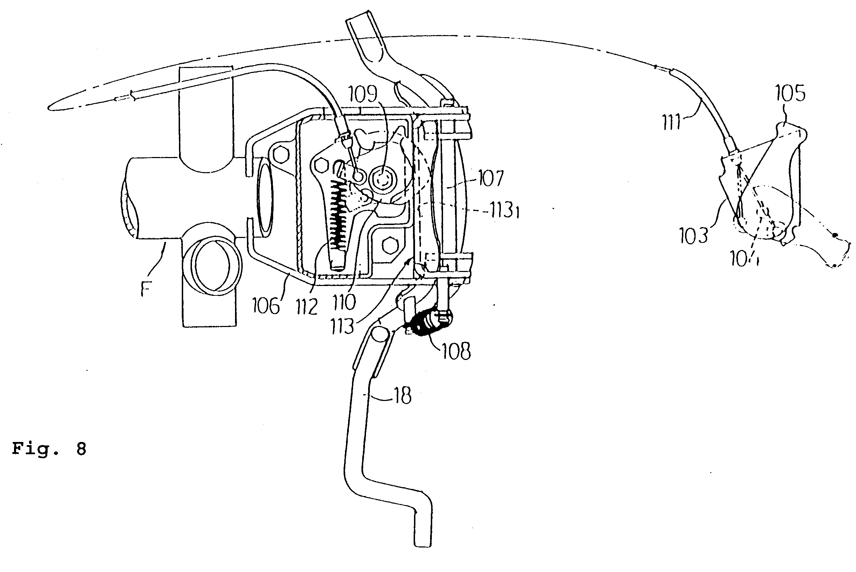

A lock lever supporting member 103 is provided on the lower surface of the bracket 61₄ for supporting the rear portion of the fuel tank 68. A stand lock lever 105 is pivotably supported on the lock lever supporting member 103 through a pivot 104. On the other hand, the main stand 18 is pivotably supported on a stand stay 106 provided on the lower portion of the vehicular body F through a pin 107 in such a manner as to be rockable in the longitudinal direction of the vehicular body. The main stand 18 is stably positioned at a rising position shown in Fig. 8 by an elastic force of a toggle spring 108, and it is rocked upward against the elastic force to be positioned at a storage position. A cam plate 110 is pivotably supported on the stand stay 106 through the pivot 109. The cam plate 110 is connected to the stand lock lever 105 through the Bowden cable 111, and it is also biased counterclockwise through a spring 112 as shown in Fig. 8. A slit 113₁, with which the cam plate 110 is to be engaged, is formed in a stopper plate 113 integrated with the main stand 18.

Accordingly, as shown by the solid line in Fig. 8, when a stand lock lever 105 is operated from a position shown by the chain line to a position shown by the solid line in the state that the main stand 18 is raised, a cam 110 pulled by the Bowden cable 111 is turned against the spring 112 and is then engaged with the slit 113₁ of the stopper plate 113 integrated with the main stand 18, so that the main stand 18 is locked in the rising position.

As is apparent from Fig. 7, the stand lock lever 105 is positioned under the removably mounting portion 102 of the burglar preventive device 100. Consequently, when the seat 16 is turned to take out the burglar preventive device 100 for stopping the motor-bicycle V, the stand lock lever 105 positioned under the burglar preventive device 100 naturally comes in sight. As a result, the main stand 18 can be locked without fail.

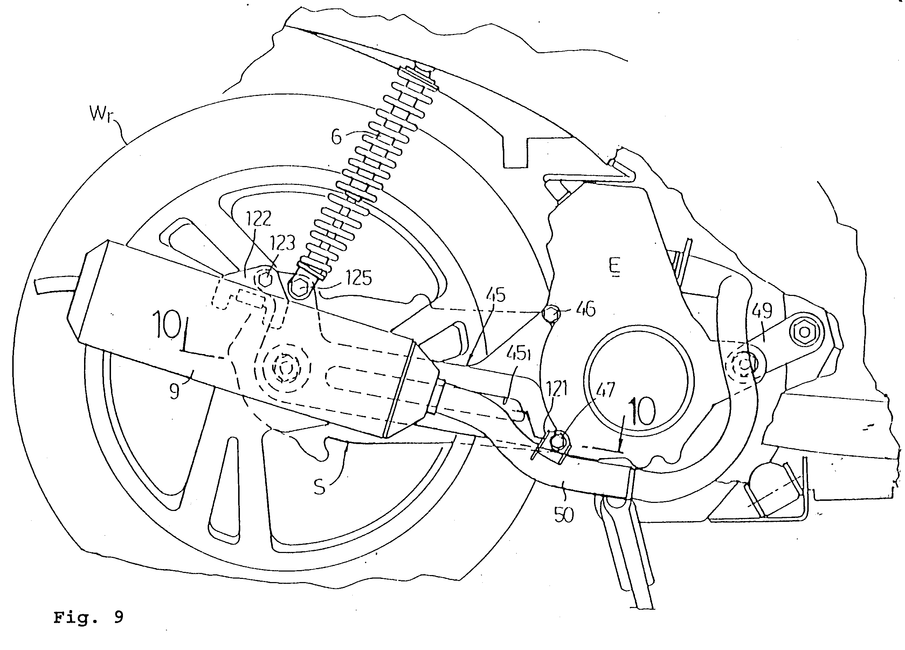

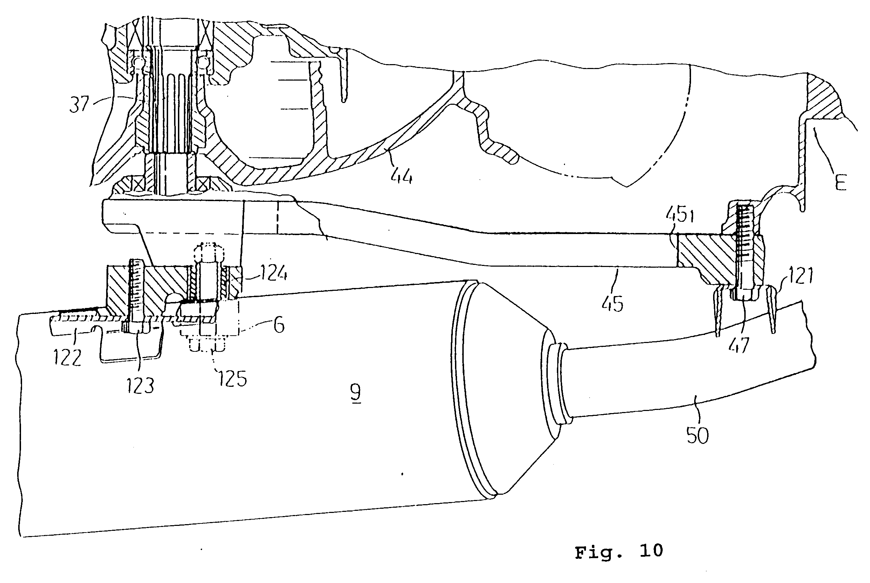

A second embodiment of the present invention will be described below with reference to Figs. 9 and 10.

A swing arm 45 in the second embodiment includes a single opening 45₁ extending in the longitudinal direction of the vehicular body. Just as in the first embodiment, the opening 45₁ is effective to prevent engine noise and/or running noise from resonating in a space surrounded by the transmission case 7 and the swing arm 45. This makes it possible to suppress the noise increased due to the resonance.

The front end of the swing arm 45 is fixed on the engine E by means of upper and lower bolts 46, 47, and a mounting stay 121 provided on an exhaust pipe 50 is co-fastened to the engine E by means of the lower bolt 47, thus reducing the number of parts for mounting the mounting stay 121. A mounting stay 122 welded to the muffler 9 is fixed to the rear end portion of the swing arm 45 by means of a bolt 123. Since the exhaust pipe 50 and the muffler 9 are thus respectively supported on the front and rear portions of the swing arm 45, the exhaust system can be forcibly supported. Referring to Fig. 10, reference numerals 124, 125 indicate a rubber bush and a bolt for connecting the lower end of the right cushion 6 to the swing arm 45, respectively.

The swing arm 45 is not limited to be formed by die casting, but it may be formed by forging or pressing.

Summarized the present invention seeks to provide a motor-bicycle having a swing unit of a type in which an axle of a rear wheel is supported on both ends of a transmission case and a swing arm connected to a rear portion of an engine, wherein engine noise and/or running noise are prevented from resonating in a space surrounded by the transmission case and the swing arm, and the number of parts for mounting the muffler or the exhaust pipe are reduced.

## Claims

1. Vehicle, comprising a vehicular body and an engine (E) in driving connection with a rear wheel (Wr) of said vehicle through a transmission accommodated within a transmission case (7), said engine (E) being connected to a muffler (9) through an exhaust pipe (50), a swing unit (S) pivotably supported on said vehicular body including said transmission case (7) and a swing arm (45) extending in longitudinal direction of said vehicle, said swing unit (S) supporting an axle (37) of said rear wheel (Wr) between a rear end of said transmission case (7) and a rear end of said swing arm (45), said transmission case (7) being connected to one lateral side of a rear portion of said engine (E) and the swing arm (45) being connected to the other lateral side of said rear portion of said engine (E),
**characterized in that**
at least one opening (45₁, 45₂, 45₃) is formed in said swing arm (45) in such a manner as to penetrate said swing arm (45) in lateral direction of the vehicular body and a mounting stay (51; 121) supporting said muffler (9) or the exhaust pipe (50) is co-fastened to said engine (E) by means of bolts (46, 47) for fastening said swing arm (45) to said engine (E).

2. Vehicle according to claim 1, **characterized in that** a plurality of said openings (45₁ to 45₃) are arranged in said swing arm (45) along the longitudinal direction of the vehicular body so that said swing arm (45) is formed in a ladder-like shape.

3. Vehicle according to claim 1 or 2, **characterized in that** said swing arm (45) is fixed, at an upper front portion and a lower front portion thereof, to said engine (E).

4. Vehicle according to one of claims 1 to 3, **characterized in that** a further opening (51₁) is formed in said mounting stay (51) in such a manner as to penetrate said mounting stay (51) in the lateral direction of the vehicular body.

5. Vehicle according to one of claims 1 to 3, **characterized in that** said mounting stay (121) supports said exhaust pipe (50) and said muffler (9) is fastened to the rear portion of said swing arm (45) by means of a bolt (123).

## Patentansprüche

1. Fahrzeug, umfassend einen Fahrzeugrumpf und einen Motor (E) in Antriebsverbindung mit einem Hinterrad (Wr) des Fahrzeugs durch ein in einem Getriebegehäuse (7) aufgenommenes Getriebe, wobei der Motor (E) durch ein Abgasrohr (50) mit einem Schalldämpfer (9) verbunden ist, wobei eine an dem Fahrzeugrumpf schwenkbar gelagerte Schwingeinheit (S) das Getriebegehäuse (7) und einen in Längsrichtung des Fahrzeugs verlaufenden Schwingarm (45) umfaßt, wobei die Schwingeinheit (S) eine Achse (37) des Hinterrads (Wr) zwischen einem Hinterende des Getriebegehäuses (7) und einem Hinterende des Schwingarms (45) trägt, wobei das Getriebegehäuse (7) mit einer Querseite eines hinteren Abschnitts des Motors (E) verbunden ist und der Schwingarm (45) mit der anderen Querseite des hinteren Abschnitts des Motors (E) verbunden ist,
dadurch gekennzeichnet, daß
zumindest eine Öffnung (45₁, 45₂, 45₃) in dem Schwingarm (45) derart ausgebildet ist, daß sie den Schwingarm (45) in Querrichtung des Fahrzeugrumpfs durchdringt, und daß eine den Schalldämpfer (9) oder das Abgasrohr (50) tragende Haltestrebe (51; 121) mittels Bolzen (46, 47) zum Befestigen des Schwingarms (45) an dem Motor (E) gemeinsam an dem Motor (E) befestigt ist.

2. Fahrzeug nach Anspruch 1, dadurch gekennzeichnet, daß in dem Schwingarm (45) entlang der Längsrichtung des Fahrzeugrumpfs eine Mehrzahl der Öffnungen (45₁ bis 45₃) angeordnet ist, so daß der Schwingarm (45) leiterartig ausgebildet ist.

3. Fahrzeug nach Anspruch 1 oder 2, dadurch gekennzeichnet, daß der Schwingarm (45) an seinem oberen vorderen Abschnitt und seinem unteren vorderen Abschnitt an dem Motor (E) befestigt ist.

4. Fahrzeug nach einem der Ansprüche 1 bis 3, dadurch gekennzeichnet, daß in der Haltestrebe (51) eine weitere Öffnung (51₁) derart ausgebildet ist, daß sie die Haltestrebe (51) in Querrichtung des Fahrzeugrumpfs durchdringt.

5. Fahrzeug nach einem der Ansprüche 1 bis 3, dadurch gekennzeichnet, daß die Haltestrebe (121) das Abgasrohr (50) trägt und der Schalldämpfer (9) an dem hinteren Abschnitt des Schwingarms (45) mittels eines Bolzens (123) befestigt ist.

## Revendications

1. Véhicule comprenant une carrosserie de véhicule et un moteur (E) en liaison d'entraînement avec une roue arrière (Wr) dudit véhicule via une transmission logée dans un carter de transmission (7), ledit moteur (E) étant relié à un silencieux (9) via un tuyau d'échappement (50), une unité oscillante (S) supportée à pivotement sur ladite carrosserie de véhicule comprenant ledit carter de transmission (7) et un bras oscillant (45) s'étendant dans la direction longitudinale dudit véhicule, ladite unité oscillante (S) supportant un essieu (37) de ladite roue arrière (Wr) entre une extrémité arrière dudit carter de transmission (7) et une extrémité arrière dudit bras oscillant (45), ledit carter de transmission (7) étant relié à un côté latéral d'une partie arrière dudit moteur (E) et le bras oscillant (45) étant relié à l'autre côté latéral de ladite partie arrière dudit moteur (E),
caractérisé en ce qu'au moins une ouverture (45₁, 45₂, 45₃) est formée dans ledit bras oscillant (45), de manière à pénétrer dans ledit bras oscillant (45) dans la direction latérale de la carrosserie de véhicule et un étai de montage (51 ; 121) supportant ledit silencieux (9) ou le tuyau d'échappement (50) est co-fixé audit moteur (E) au moyen de boulons (46, 47) pour fixer ledit bras oscillant (45) audit moteur (E).

2. Véhicule selon la revendication 1, caractérisé en ce qu'une pluralité des dites ouvertures (45₁ à 45₃) sont agencées dans ledit bras oscillant (45) dans la direction longitudinale de la carrosserie de véhicule, de manière que ledit bras oscillant (45) soit réalisé sous une forme d'échelle.

3. Véhicule selon la revendication 1 ou 2, caractérisé en ce que ledit bras oscillant (45) est fixé, au niveau d'une partie avant supérieure et d'une partie avant inférieure de ce dernier, audit moteur (E).

4. Véhicule selon l'une des revendications 1 à 3, caractérisé en ce qu'une autre ouverture (51₁) est formée dans ledit étai de montage (51) de manière à pénétrer dans ledit étai de montage (51) dans la direction latérale de la carrosserie de véhicule.

5. Véhicule selon l'une des revendications 1 à 3, caractérisé en ce que ledit étai de montage (121) supporte ledit tuyau d'échappement (50) et ledit silencieux (9) est fixé à la partie arrière dudit bras oscillant (45) au moyen d'un boulon (123).
